# EUROPÄISCHE PATENTSCHRIFT

(11) **EP 0 505 668 B1**
(45) Veröffentlichungstag und Bekanntmachung des Hinweises auf die Patenterteilung: **27.09.1995**
(21) Anmeldenummer: 91890059.8
(22) Anmeldetag: 26.03.1991
(51) Int. Cl.: B25B 11/00

(54) **Arbeitstisch mit Vakuum-Ansaugung für Werkzeugmaschinen**
Work table with vacuum clamping
Table de travail à vide

(43) Veröffentlichungstag der Anmeldung: 30.09.1992
(73) Patentinhaber: GFM Gesellschaft für Fertigungstechnik und Maschinenbau Aktiengesellschaft, A-4403 Steyr (AT)
(72) Erfinder: Blaimschein, Gottfried, Dipl.-Ing., A-4407 Steyr (AT)
(74) Vertreter: Hübscher, Heiner, Dipl.-Ing.

(56) Entgegenhaltungen:
- EP-A- 0 203 905
- EP-A- 0 361 818
- DE-C- 3 838 988
- US-A- 4 684 113
- PATENT ABSTRACTS OF JAPAN, vol. 6, no. 232 (M-172)(1110) 18 November 1982 & JP-A-57 132 938 (NIPPON DENKI K.K.) 17 August 1982

## Beschreibung

Die Erfindung bezieht sich auf einen Arbeitstisch für Werkzeugmaschinen, insbesondere Schneidmaschinen zur Bearbeitung von Flachmaterial, mit einer Vielzahl in einer rasterähnlichen Teilung nebeneinander angeordneter Unterdrucksauger zum Auflegen und Festhalten der Werkstücke, wobei die Unterdrucksauger höhenverstellbare Saugnäpfe tragen, die über jeweils für sich ansteuerbare Stelltriebe aus einer unteren Grundstellung in eine obere, innerhalb eines bestimmten Höhenbereiches veranderbare Wirkstellung hochfahrbar sind, vgl. US-A-4 684 113.

Für die Bearbeitung von Flachmaterial, beispielsweise das Trimmen oder Umrißfräsen von Blechplatten, Holzteilen und inbesondere von ein- oder mehrlagigen Kunststoffzuschnitten (Composits) haben sich Arbeitstische mit unterdruckbeaufschlagbarer Arbeitsfläche gut bewährt, da die flächigen Werkstücke durch die Unterdruckbeaufschlagung weitgehend unabhängig von ihrer geometrischen Form während der Bearbeitung auf der Arbeitsfläche sicher festgehalten werden können. Dabei wurde gemaß der EP-B 0 069 230 bereits vorgeschlagen, einen Arbeitstisch mit einzelnen Unterdrucksaugern auszustatten und die Werkstücke nicht auf eine durchgehende Arbeitsfläche, sondern nur auf die Saugnäpfe dieser Sauger aufzulegen. Die bekannten Unterdrucksauger müssen aber punktuell an vorgegebenen Stellen des Werkstückes angesetzt werden, um die gewünschte Halterung zu erreichen, so daß sich diese Arbeitstische wegen der Notwendigkeit des individuellen Einstellens der einzelnen Sauger auch nur für bestimmte, in ihrer Gestalt gleichbleibende Werkstücke eignen. Außerdem kommt es auf Grund der verhältnismäßig geringen Anzahl an diskreten Unterstützungspunkten bei der Bearbeitung der Werkstücke zu starken Vibrationserscheinungen, die vielfach eine Kombination mit mechanischen Spanneinrichtungen erforderlich machen.

Wie die eingangs genannten US-A 4 684 113 zeigt, gibt es auch schon Haltevorrichtungen für Werkzeugmaschinen mit einer Vielzahl von Unterdrucksaugern, die über jeweils für sich ansteuerbare Stelltriebe höhenverstellbare Saugnäpfe aufweisen, wobei die einzelnen Hubstempel computergesteuert entsprechend der Werkstückoberfläche in die jeweilige Sollposition hochfahrbar sind, was zwar die Halterung auch gekrümmter Werkstücke erlaubt, aber für jeden Unterdrucksauger einen positionierbaren Stelltrieb erfordert und damit zu einem hohen Bau- und Steuerungsaufwand fuhrt.

Der Erfindung liegt daher die Aufgabe zugrunde, diese Mängel zu beseitigen und einen Arbeitstisch der eingangs geschilderten Art zu schaffen, der auf verhältnismäßig einfache Weise eine rationelle Werkstückhalterung für beliebige Werkstückformen gewärleistet und darüber hinaus optimale Voraussetzungen für eine gewünschte Bearbeitungsqualität und volle Werkzeugnutzung bietet.

Die Erfindung löst diese Aufgabe dadurch, daß die Stelltriebe in zwei Leistungsstufen ansteuerbar sind und zur Halterung eines Werkstuckes zuerst die Saugnäpfe im Werkstuckrandbereich liegender Unterdrucksauger mit der höheren Leistungsstufe zum positionierenden Auflegen des Werkstückes und dann nach der Werkstückauflage die Saugnäpfe der übrigen, innerhalb des Werkstuckrandes liegenden Unterdrucksauger mit der niedrigeren Leistungsstufe bis zum Anliegen an der Werkstückoberfläche zum formgerechten Festhalten des Werkstückes hochgefahren werden. Dadurch ist es nun möglich, auch unebene Werkstücke ohne großen Aufwand zur Höhenpositionierung der Saugnäpfe einwandfrei abzustützen, da die Saugnäpfe sich in ihrer Höhenlage beim Hochfahren an die Werkstückform anpassen können. Zur Werkstückhalterung werden daher vorerst nur die im Randbereich der Werkstücke anzusetzenden Sauger hochgefahren, und zwar mit normaler Leistung, so daß sie ihre ordnungsgemäße Abstützfunktion erfüllen können, worauf dann die im Innenbereich der Werkstücke anzusetzenden Sauger mit geringerer Leistung hochgefahren werden, bis sie am Werkstück anliegen und ihre Halterungsaufgaben übernehmen. Damit die Werkstückhalterung durch das nachträgliche Ansetzen der inneren Sauger nicht beeinträchtigt wird, fahren diese inneren Sauger mit gegenüber der Stützkraft der randseitigen Sauger geringerer Kraft aufwärts, was die gewünschte Abstützung auch gewölbter Werkstück od.dgl. sicherstellt. Es werden nur die Sauger aktiviert, deren Saugnapfe die Werkstückkonturen gerade nicht überragen, wodurch die Bearbeitungswerkzeuge einwandfrei arbeiten und optimal genutzt werden können. Es gibt keine Beeinträchtigung der Unterdruckbeaufschlagung durch den Werkzeugeinsatz, Vibrationen des Werkstuckes auf Grund der Bearbeitung werden durch die Vielzahl der Sauger unterbunden und es sind keinerlei zusätzliche Hilfsmittel, wie Zwischenplatten und Folienabdeckungen u. dgl., für die Werkstückhalterung erforderlich.

Sind die Sauger gruppenweise mit verschiedener Teilung angeordnet, lassen sich spezielle Auflagebereiche für verschiedene Werkstücke vorgeben, beispielsweise können für kleinere Werkstückformate Bereiche mit engerer Teilung vorgegeben werden oder es sind für spezielle Werkstücke von vornherein spezielle Saugeranordnungen vorbereitet.

Vorteilhaft ist es auch, wenn der Auflagebereich für die Werkstücke in wenigsten zwei Abschnitte unterteilt ist, deren Sauger Jeweils einer gemeinsamen Unterdruckquelle zugehören. Dadurch können diese Abschnitte für verschiedene Arbeitsgänge verwendet werden, so daß gleichzeitig während der Bearbeitung in dem einen Abschnitt im andern Abschnitt das Auflegen oder Abnehmen der Werkstücke erfolgen kann usw. Durch die gemeinsame Unterdruckquelle für die Saugnäpfe jedes Abschnittes brauchen nur die Abschnitte, deren Sauger Halterungsfunktionen ausüben, unterdruckbeaufschlagt zu werden, was einen wirtschaftlichen Betrieb erlaubt. Selbstverständlich können gegebenenfalls auch die Abschnitte wechselweise an ein und dieselbe Druckquelle angeschlossen werden, wenn immer nur einer dieser Abschnitte unterdruckbeaufschlagt werden soll.

Eine zweckmäßige Konstruktion ergibt sich, wenn die Sauger einen mit einer axialen Saugbohrung versehenen, kopfseitig den Saugnapf tragenden Hubstempel aufweisen, welcher mit dem zughörenden Stelltrieb antriebsverbundene Hubstempel verschiebbar in einer eine Saugkammer durchragenden Büchse geführt ist, wobei der Hubstempel im Büchsenbereich eine radiale Anschlußbohrung besitzt und mit einer Querbohrung der Büchse schieberartig zusammenwirkt. Ein solcher Hubstempel läßt sich durch den Stelltrieb, vorzugsweise einen Kolbentrieb, einfach verstellen und ergibt mit seiner Verschiebebewegung nicht nur die gewünschte Höhenverstellung des Saugnapfes, sondern auch gleichzeitig den Anschluß des Saugnapfes an die unterdruckbeaufschlagte Saugkammer. Sobald nämlich der Hubstempel soweit hochgefahren ist, daß die Anschlußbohrung die Querbohrung überdeckt, wird automatisch der Saugnapf über die Saugbohrung an die Saugkammer angeschlossen und der Unterdruck in der Saugkammer kann über den Saugnapf am Werkstück einwirken. Sitzt dabei der Saugnapf exzentrisch am drehbar in der Büchse gelagerten Hubstempel und ist in der Büchse eine zweigeteilte Steuerhülse angeordnet, die mit den einander zugekehrten Stirnflächen ihrer Teile Steuerkurven für einen zwischen sie eingreifenden Steuerbolzen des Hubstempels bildet, wird durch das Zusammenwirken von Steuerbolzen und Steuerkurven zwangsweise mit einer Hubbewegung des Hubstempels auch eine Verdrehung des Hubstempels und damit des Saugnapfes erreicht. Durch entsprechendes Ansteuern der Stelltriebe kann daher die Drehpostion der Saugnäpfe gewählt und automatisch die Teilung der Saugnäpfe geändert werden, wodurch sich bedarfsweise die Position der Saugnäpfe an bestimmte Werkstückkonturen anpassen läßt. Die Steuerkurven können verschieden ausgebildet sein, sie können beispielsweise in Form gegeneinander versetzter Sägezahnlinien verlaufen, so daß die Drehbewegung des Hubstempels schrittweise bei einer Auf- und Abwärtsbewegung erfolgt, sie können aber auch durch eine entsprechende höhenmäßige Abstufung für verschiedene, vorbestimmte Höhenlagen der Hubstempel sorgen, um die Saugnäpfe höhenmäßig auf bestimmte Werkstückformen auszurichten usw.

Ist für eine Reihe von Saugern eine gemeinsame Unterdruckkammer vorgesehen, entsteht eine verhältnismäßig einfache Konstruktion, der Installationsaufwand für Saugleitungen u. dgl. bleibt gering und es wird auf einfache Weise auch für gleichmäßige Unterdruckbeaufschlagungen gesorgt.

Eine weitere Anpassungsmöglichkeit der Sauger an unterschiedliche Werkstücke u. dgl. ergibt sich dadurch, daß die Unterdrucksauger querverstellbar im Tischgestell abgestützt sind. Dies kann durch eine einzelverstellbare Lagerung erfolgen, aber auch durch eine Verlagerung einer ganzen Saugerreihe mittels einer verschiebbar geführten gemeinsamen Unterdruckkammer od.dgl. Auch eine solche Verstellung ermöglicht es, den Arbeitstisch individuell an verschiedene Arbeitsprogramme, Werkstückformen und -größen u.dgl. anzupassen.

In der Zeichnung ist der Erfindungsgegenstand beispielsweise veranschaulicht, und zwar zeigen
- Fig. 1: einen erfindungsgemäßen Arbeitstisch in einer schematischen Draufsicht,
- Fig. 2: einen Unterdrucksauger dieses Arbeitstisches im Vertikalschnitt größeren Maßstabes und
- Fig. 3: ein anderes Ausführungsbeispiel eines Unterdrucksaugers ebenfalls im Vertikalschnitt.

Um Flachmaterial weitgehend unabhängig von Form und Größe für eine Bearbeitung, insbesondere eine Randbearbeitung durch Umrißfräsen, gut und sicher spannen zu können, gibt es einen Arbeitstisch 1, dessen Auflage 2 sich aus einer Vielzahl in einer rasterähnlichen Teilung nebeneinander angeordneter Unterdrucksauger 3 zusammensetzt. Diese Unterdrucksauger 3 besitzen Saugnäpfe 4, die jeweils über für sich ansteuerbare Zylindertriebe 5 als Stelltriebe aus einer unteren Grundstellung, in der keine Unterdruckbeaufschlagung erfolgt, in eine obere Wirkstellung mit Unterdruckbeaufschlagung ausfahrbar sind. Dazu weisen die Unterdrucksauger 3 einen kopfseitig den Saugnapf 4 tragenden, mit dem Stelltrieb 5 verbundenen Hubstempel 6 auf, der verschiebbar in einer eine Saugkammer 7 durchragenden Büchse 8 geführt ist. Der Hubstempel 6 ist mit einer axialen Saugbohrung 9 und einer radialen Anschlußbohrung 10 versehen, und die Büchse 8 weist eine Querbohrung 11 auf, die je nach Höhenlage des Hubstempels 6 die Saugbohrung 9 über die Anschlußbohrung 10 mit der Saugkammer 7 verbindet oder absperrt. Durch entsprechende Wahl der Anschlußbohrung 10 bzw. Querbohrung 11 läßt sich daher auf einfache Weise beim Hochfahren des Hubstempels 6 eine Wirkstellung erreichen, in der der Saugnapf 4 über die Unterdruckkammer 7 unterdruckbeaufschlagbar ist, und beim Zurückfahren eine belüftete Grundstellung einnehmen.

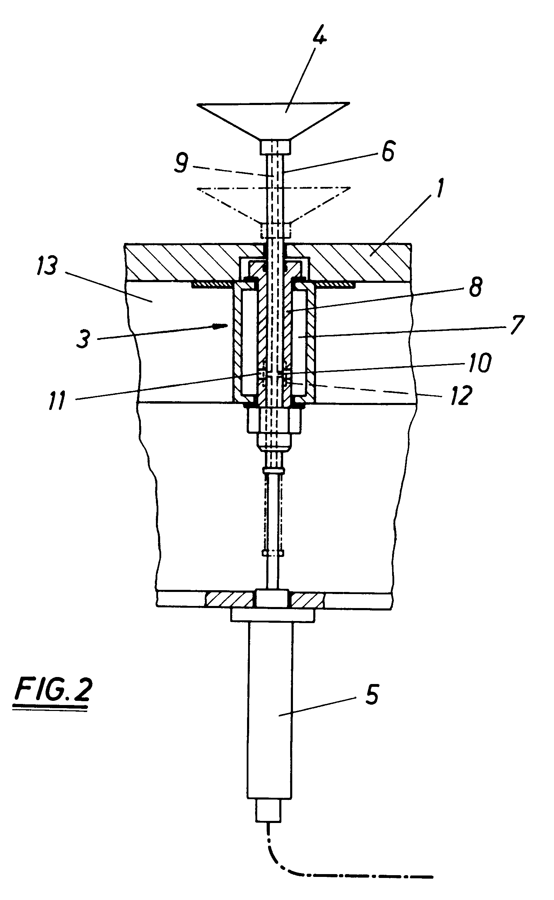

Geht, wie strichliert in Fig. 2 angedeutet, die Querbohrung 11 der Büchse 8 in einen inneren Ringraum 12 über, wird der Ringraumbreite gemäß ein Höhenbereich geschaffen, in dem die Wirkstellung der Saugnäpfe 4 verändert werden kann, ohne die Unterdruckbeaufschlagung zu unterbinden, so daß sich die Saugnäpfe höhenmäßig an ein gekrümmtes Werkstück od. dgl. anpassen können. Um hier den Abfall der Saugwirkung durch einen freien Saugnapf zu verhindern, sind die Bohrungs- und Leitungsquerschnitte entsprechend eng bemessen oder bestimmte Drosselstellen eingebaut, so daß zusammen mit einer geeigneten Pumpenleistung eine stets ausreichende Unterdruckbeaufschlagung und ein ordnungsgemäßer Betrieb gewährleistet sind.

Da nicht jeder Unterdrucksauger 3 eine eigene Unterdruckkammer oder einen eigenen Unterdruckanschluß erfordert, sind für jeweils eine Saugerreihe jeweils gemeinsame Saugkammern 7 vorgesehen, die im Tischgestell eingesetzt sind und gleichzeitig Trägerfunktion ausüben. Dabei werden zweckmäßigerweise in den längsseitigen Tischholmen 13, an die die Saugkammern 7 stirnseitig anschließen, die zur nicht weiter dargestellten Unterdruckquelle führenden Anschlußleitungen für die Saugkammern 7 verlegt sein.

Zweckmäßigerweise sind die Auflage 2 des Arbeitstisches 1 in beispielsweise zwei Abschnitte 2a, 2b unterteilt, wobei die Sauger 3 des einen Abschnittes 2a und des anderen Abschnittes 2b jeweils von einer gemeinsamen Unterdruckquelle versorgt werden. Dadurch lassen sich die Sauger des einen Abschnittes unabhängig von denen des anderen Abschnittes unterdruckbeaufschlagen, so daß gleichzeitig der eine Abschnitt zur Bearbeitung der Werkstücke und der andere Abschnitt zum Auflegen oder Abnehmen der Werkstücke genutzt werden können.

Zur Anpassung der Auflage 2 an verschiedene Werkstücke ist es zweckmäßig, zumindest eine Gruppe von Saugern 3 innerhalb eines bestimmten Bereiches 2c der Auflage mit einer geänderten, vorzugsweise kleineren Teilung anzuordnen, um hier besonders kleinere Werkstücke gut und sicher abstützen zu können.

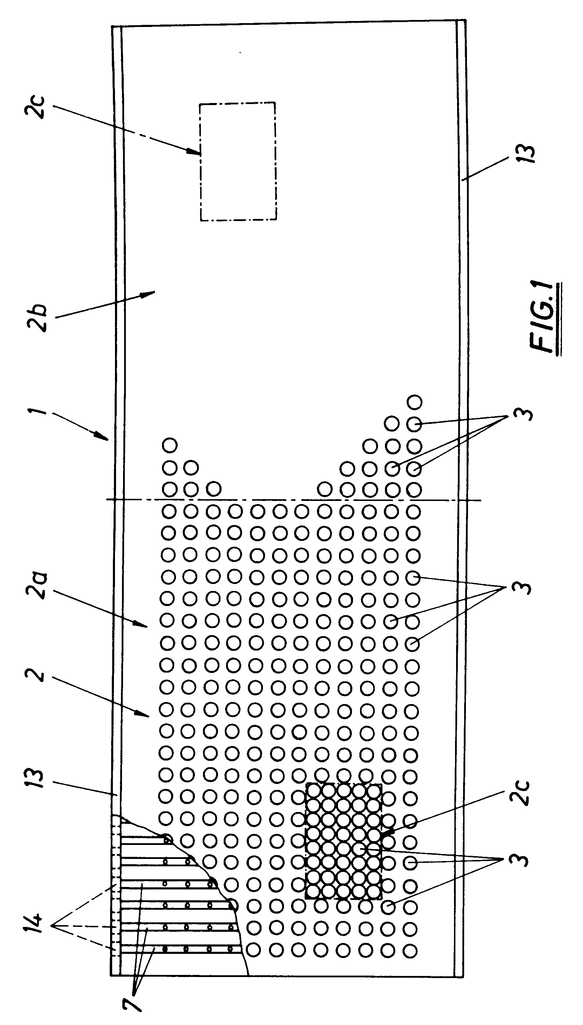

Zur Anpassung der Sauger 3 an verschiedene Werkstückformen und -größen können diese Sauger bzw. deren Saugnäpfe parallel zur Auflagefläche verstellbar sein, was beispielsweise durch ein Querverschieben der Saugkammern 7 möglich wäre, die dazu, wie in Fig. 1 strichliert angedeutet, über Lagerschlitten 14 an den Tischholmen 13 geführt sind.

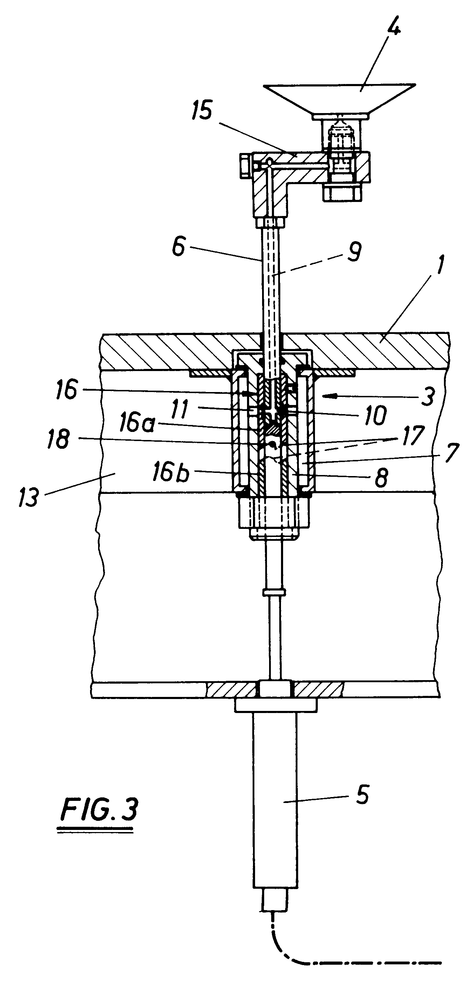

Besonders zweckmäßig ist es aber, wenn dazu, wie in Fig. 3 veranschaulicht, die Unterdrucksauger 3 drehverstellbare und exzentrisch angeordnete Saugnäpfe 4 besitzen. Die Saugnäpfe 4 stecken dabei in einem Exzenterkopf 15 des Hubstempels 6, welcher Hubstempel 6 mit einer in der Büchse 8 eingesetzten Steuerhülse 16 zusammenwirkt. Diese Steuerhülse 16 ist zweigeteilt und bildet mit den einander zugekehrten Stirnflächen ihrer Teile 16a, 16b Steuerkurven 17, zwischen die ein Steuerbolzen 18 des Hubstempels eingreift, so daß durch eine Hubbewegung des Hubstempels 6 der den Steuerkurven 7 entlanggleitende Steuerbolzen 18 dem Hubstempel 6 eine Drehbewegung aufzwingt. Durch ein ein- oder mehrmaliges Heben und Senken des Hubstempels 6 über den Stelltrieb 5 läßt sich so der Hubstempel 6 und damit der Saugnapf 4 um die Achse des Hubstempels 6 verdrehen und eine gewünschte, im Bereich dieser Drehung liegende Positionierung des Saugnapfes 4 durchführen. Durch einen entsprechenden Verlauf der Steuerkurve 17 könnte dabei auch eine unterschiedliche Höhenlage des Hubstempels erreicht werden, welche Höheneinstellung aber meist nur im Zusammenhang mit einem zentrisch auf den Hubstempel 6 aufgesetzten Saugnapf 4 zweckmäßig ist, damit eine Kopplung zwischen Drehposition und Höhenlage vermieden wird.

Da die Stelltriebe 5 der Unterdrucksauger 3 individuell ansteuerbar sind, kann der Arbeitstisch 1 durch eine einfache Programmsteuerung auf jedes beliebige Werkstück angepaßt werden, da entsprechend der Werkstückform und -größe nur die Sauger 3 aktiviert werden, die innerhalb der Werkstückkontur zu liegen kommen. Durch Hochfahren dieser Sauger 3 wird das Werkstück satt und großflächig bis in den Randbereich abgestützt, wobei aber der eigentliche Rand für die Bearbeitung frei bleibt, was beste Bearbeitungsqualitäten und günstigste Werkzeugnutzungen erlaubt. Da beim Hochfahren der jeweiligen Sauger automatisch die Wirkstellung der Saugnäpfe mit der damit verbundenen Unterdruckbeaufschlagung eingenommen wird, ergibt sich ohne weiteres Zutun beim Hochfahren die gewünschte Abstützung und Halterung des Werkstückes, so daß ein rationeller Betrieb gewährleistet ist. Beim Absenken kommt es im umgekehrten Sinne zur Entlastung, was das Freigeben der Werkstücke für ein Abnehmen bzw. Neuauflegen bedeutet. Da durch einfache konstuktive Maßnahmen auch innerhalb eines bestimmten Höhenbereiches verschiedene Wirkstellungen eingenommen werden können, lassen sich automatisch auch gekrümmte, abgestufte od. dgl. geformte Werkstücke abstützen und haltern, denn nach einem Hochfahren randseitiger Sauger zur positionierenden Halterung des Werkstückes können die innenliegenden Sauger bis zum Ansatz an der Werkstückoberfläche hochgefahren und so an die Werkstückform angepaßt werden.

## Patentansprüche

1. Arbeitstisch (1) für Werkzeugmaschinen, insbesondere Schneidmaschinen zur Bearbeitung von Flachmaterial, mit einer Vielzahl in einer rasterähnlichen Teilung nebeneinander angeordneter Unterdrucksauger (3) zum Auflegen und Festhalten der Werkstücke, wobei die Unterdrucksauger (3) höhenverstellbare Saugnäpfe (4) tragen, die über jeweils für sich ansteuerbare Stelltriebe (5) aus einer unteren Grundstellung in eine obere, innerhalb eines bestimmten Höhenbereiches veränderbare Wirkstellung hochfahrbar sind, dadurch gekennzeichnet, daß die Stelltriebe (5) in zwei Leistungsstufen ansteuerbar sind und zur Halterung eines Werkstückes zuerst die Saugnäpfe (4) im Werkstückrandbereich liegender Unterdrucksauger (3) mit der höheren Leistungsstufe zum positionierenden Auflegen des Werkstückes und dann nach der Werkstückauflage die Saugnäpfe (4) der übrigen, innerhalb des Werkstückrandes liegenden Unterdrucksauger (3) mit der niedrigeren Leistungsstufe bis zum Anliegen an der Werkstückoberfläche zum formgerechten Festhalten des Werkstückes hochgefahren werden.

2. Arbeitstisch (1) nach Anspruch 1, dadurch gekennzeichnet, daß die Sauger (3) gruppenweise mit verschiedener Teilung (2c) angeordnet sind.

3. Arbeitstisch (1) nach Anspruch 1 oder 2, dadurch gekennzeichnet, daß der Auflagebereich (2) für die Werkstücke in wenigstens zwei Abschnitte (2a, 2b) unterteilt ist, deren Sauger (3) Jeweils einer gemeinsamen Unterdruckquelle zugehören.

4. Arbeitstisch (1) nach einem der Ansprüche 1 bis 3, mit Unterdrucksaugern (3), die einen mit einer axialen Saugbohrung (9) versehenen, kopfseitig den Saugnapf (4) tragenden Hubstempel (6) aufweisen, welcher mit dem zugehörenden Stelltrieb (5) antriebsverbundene Hubstempel (6) verschiebbar in einer eine Saugkammer (7) durchragenden Büchse (8) geführt ist, wobei der Hubstempel (6) im Büchsenbereich eine radiale Anschlußbohrung (10) besitzt und mit einer Querbohrung (11) der Büchse (8) schieberartig zusammenwirkt, dadurch gekennzeichnet, daß der Saugnapf (4) exzentrisch am drehbar in der Büchse (8) gelagerten Hubstempel (6) sitzt und in der Büchse (8) eine zweigeteilte Steuerhülse (16) angeordnet ist, die mit den einander zugekehrten Stirnflächen ihrer Teile (16a, 16b) Steuerkurven (17) für einen zwischen sie eingreifenden Steuerbolzen (18) des Hubstempels (6) bildet.

5. Arbeitstisch (1) nach einem der Ansprüche 1 bis 4, dadurch gekennzeichnet, daß für eine Reihe von Saugern (3) jeweils eine gemeinsame Unterdruckkammer (7) vorgesehen ist.

6. Arbeitstisch (1) nach einem der Ansprüche 1 bis 5, dadurch gekennzeichnet, daß die Unterdrucksauger (3) querverstellbar im Tischgestell abgestützt sind.

## Claims

1. A work table (1) for machine tools, more particularly cutting machines for machining flat material, comprising a number of negative-pressure suckers (3) disposed side by side in an array in the form of a raster for supporting and holding the workpieces, the suckers (3) bearing vertically adjustable suction cups (4), each movable via a separately adjustable drive (5) from a lower basic position into an upper operative position variable within a specific height range, characterised in that the drives (5) are adapted to be actuated in two power stages and, in order to hold a workpiece, firstly the cups (4) of the suckers (3) at the edge region of the workpiece are moved at the higher power stage for positioning and supporting the workpiece and then, after the workpiece has been supported, the cups (4) of the other suckers (3) disposed inside the edge of the workpiece are driven at the lower power stage until they abut the workpiece surface so as to hold it without distorting its shape.

2. A work table (1) according to claim 1, characterised in that the suckers (3) are disposed in groups with variable spacing (2c).

3. A work table (1) according to claim 1 or 2, characterised in that the support region (2) for the workpieces is divided into at least two sections (2a, 2b), the suckers (3) for each section being associated with a common negative-pressure source.

4. A work table according to any of claims 1 to 3, comprising suckers (3) comprising a jack (6) formed with an axial suction bore (9) and bearing the cup (4) at its head, which jack (6), which is connected to and driven by the associated drive (5), is guided fir displacement in a bush (8) extending through a suction chamber (7), and in the bush region the jack (6) has a radial connecting bore (10) and co-operates like a slider with a transverse bore (11) in the bush (8), characterised in that the cup (4) is eccentrically disposed on the jack (6), which is rotatably mounted in the bush (8), and a two-part control sleeve (16) is disposed in the bush (8) and the facing end-faces of its parts (16a, 16b) form cams (17) for a control pin (18) of the jack (6), which engages between them.

5. A work table (1) according to any of claims 1 to 4, characterised in that a common negative-pressure chamber (7) is provided for each row of suckers (3).

6. A work table (1) according to any of claims 1 to 5, characterised in that the negative-pressure suckers (3) are supported in the table frame so as to be transversely adjustable.

## Revendications

1. Table de travail (1) pour machines-outils, en particulier machines de coupe pour l'usinage de matériaux plats, avec une pluralité de suceurs à vide (3) disposés les uns à côté des autres en une division analogue à une trame, pour poser et fixer les pièces façonnées, les suceurs à vide (3) portant des ventouses (4) réglables en hauteur, relevables par l'intermédiaire de mécanismes de réglage (5) à commande individuelle depuis une position de base basse en une position active supérieure, modifiable dans les limites d'une plage de hauteurs déterminée,
caractérisée par le fait que les mécanismes de réglage (5) peuvent être commandés en deux niveaux de puissance et, pour assurer la fixation d'une pièce façonnée, on commence par lever les ventouses (4) de suceur à vide (3) se trouvant dans la zone de bordure de la pièce façonnée avec le niveau de puissance supérieur pour assurer une pose, accompagnée d'un positionnement, de la pièce façonnée, puis, après la pose de la pièce façonnée, les ventouses (4) des suceurs à vide (3) restants se trouvant dans les limites de la bordure de la pièce sont déplacées avec le niveau de puissance inférieur, jusqu'à venir en appui sur la surface de la pièce façonnée pour assurer un maintien, conforme à la forme de la pièce, de la pièce façonnée.

2. Table de travail (1) selon la revendication 1,
caractérisée par le fait que les suceurs (3) sont disposés par groupes avec une division (2c) qui varie.

3. Table de travail (1) selon la revendication 1 ou 2,
caractérisée par le fait que la zone de pose (2) des pièces façonnées est subdivisée en au moins deux sections (2a, 2b) dont les suceurs (3) appartiennent chacun à une source de vide commune.

4. Table de travail selon l'une des revendications 1 à 3, avec des suceurs à vide (3), présentant un poinçon de levage (6) pourvu d'un perçage d'aspiration axial (9) et portant, côté tête ,la ventouse (4), ledit poinçon de levage (6) relié en entraînement au mécanisme de réglage (5) afférent étant guidé de façon déplaçable dans une douille (8) traversant une chambre d'aspiration (7), le poinçon de levage (6) ayant dans la zone de douille un perçage de raccordement (10) radial et coopérant avec coulissement avec un perçage transversal (11) de la douille (8),
caractérisée par le fait que la ventouse (4) est placée de façon excentrée sur le poinçon de levage (6) monté à rotation dans la douille (8) et dans la douille (8) étant disposée une douille de commande (16) divisée en deux parties qui constitue, avec les faces frontales tournées l'une vers l'autre de ces parties (16a, 16b), des cames de commande (17) pour un boulon de commande (18) s'engageant entre elles et appartenant au poinçon de levage (6).

5. Table de travail (1) selon l'une des revendications 1 à 4,
caractérisée par le fait qu'une chambre à vide (7) commune est prévue pour chaque série de suceurs (3).

6. Table de travail (1) selon l'une des revendications 1 à 5,
caractérisée par le fait que les suceurs à vide (3) sont soutenus d'une façon permettant un réglage transversal dans le bâti de table.
